# EUROPEAN PATENT SPECIFICATION

(11) **EP 2 580 582 B1**
(45) Date of publication and mention of the grant of the patent: **04.03.2020**
(21) Application number: 11793067.7
(22) Date of filing: 08.06.2011
(51) Int. Cl.: G01N 25/20

(54) **THERMAL ANALYSIS SAMPLE HOLDER**
PROBENHALTER FÜR WÄRMEANALYSEN
PORTE-ÉCHANTILLONS POUR ANALYSE THERMIQUE

(30) Priority: 11.06.2010 US 353969 P
(43) Date of publication of application: 17.04.2013
(73) Proprietor: Waters Technologies Corporation, Milford, MA 01757 (US)
(72) Inventor: DANLEY, Robert, L., Collingswood NJ 08107 (US); HU, Xiaoping, New Castle DE 19720 (US); KRAUSE, Robert, M., Wilmington DE 19809 (US)
(74) Representative: Harding, Andrew Philip
(86) International application number: PCT/US2011/039547
(87) International publication number: WO 2011/156443

(56) References cited:
- US-A- 4 330 933
- US-A- 4 606 649
- US-A- 5 321 719
- US-A- 5 321 719
- US-B2- 7 097 352
- ROURA P ET AL: "Analysis of the sensitivity and sample-furnace thermal-lag of a differential thermal analyzer", THERMOCHIMICA ACTA, ELSEVIER SCIENCE PUBLISHERS, AMSTERDAM, NL, vol. 430, no. 1-2, 1 June 2005 (2005-06-01), pages 115-122, XP027864635, ISSN: 0040-6031 [retrieved on 2005-06-01]
- SAUERHAMMER B ET AL: "Effect of liquid phase on scale formation during high-temperature oxidation of AlSi-transformation-induced plasticity steel surfaces", METALLURGICAL AND MATERIALS TRANSACTIONS B, SPRINGER-VERLAG, NEW YORK, vol. 36, no. 4, 1 August 2005 (2005-08-01) , pages 503-512, XP019697696, ISSN: 1543-1916
- THOMSIA A P: "Ceramic/metal joining for structures and materials", JOURNAL DE PHYSIQUE IV; THE 3RD EUROPEAN CONFERENCE ON ADVANCED MATERIALS AND PROCESSES / TROISIÉME CONFÉRENCE EUROPÉENNE SUR LES MATÉRIAUX ET LES PROCÉDÉS AVANCÉS; PARIS : 1993.06.08-10; COLLOQUE C7, , vol. 3, no. C7 1 November 1993 (1993-11-01), pages 1317-1326, XP008167265, ISSN: 1155-4339, DOI: 10.1051/JP4:19937203 Retrieved from the Internet: URL:http://hal.archives-ouvertes.fr/docs/0 0/25/18/37/PDF/ajp-jp4199303C7203.pdf [retrieved on 2016-10-11]
- DALGLEISH B J ET AL: "Low temperature routes to joining ceramics for high-temperature applications", SCRIPTA METALLURGICA ET MATERIALIA, PERGAMON PRESS, GB, vol. 31, no. 8, 15 October 1994 (1994-10-15), pages 1043-1048, XP025997422, ISSN: 0956-716X, DOI: 10.1016/0956-716X(94)90524-X [retrieved on 1994-10-15]
- YU NAIDICH ET AL: "High-strength oxide ceramics joints obtained by diffusion bonding with the use of platinum and palladium gaskets", JOURNAL OF MATERIALS SCIENCE, KLUWER ACADEMIC PUBLISHERS, BO, vol. 40, no. 9-10, 1 May 2005 (2005-05-01) , pages 2477-2479, XP019211375, ISSN: 1573-4803, DOI: 10.1007/S10853-005-1978-8
- THOMSIA A. P.: 'Ceramiclmetal joining for structures and materials.' JOURNAL DE PHYSIQUE IV COLLOQUE C7, [Online] vol. 3, November 1993, pages 1317 - 1320, XP008167265 Retrieved from the Internet: <URL:http://hat.archives-ouvertes.fr/docs/0 0/25/18/37/PDF/ajp-jp4199303C7203.pdf> [retrieved on 2011-09-11]
- M. L Shalz ET AL: "Ceramic joining", Journal of Materials Science, 1 January 1993 (1993-01-01), pages 1673-1684, XP055557604, DOI: 10.1007/BF00363367 Retrieved from the Internet: URL:https://link.springer.com/content/pdf/ 10.1007/BF00363367.pdf

## Description

### TECHNICAL FIELD

The present invention relates generally to a sample holder to be used in thermal analysis instruments wherein the measurement of temperature is required, either as a desired result or as part of the measurement of heat flow rate or of a signal representing a heat flow rate such as temperature difference. Thermal analysis includes the following well-known techniques: differential thermal analysis (DTA), differential scanning calorimetry (DSC), thermogravimetry (TGA), differential thermogravimetry (DTGA), combinations of these such as DTA/TGA, DSC/TGA as well as other techniques known to those of ordinary skill in the field.

### BACKGROUND

In a typical thermal analysis apparatus, the sample to be analyzed is placed in a sample container which is placed in the sample holder which in turn is inserted into a furnace that subjects the sample to a desired temperature program and atmosphere. The sample container is made of a material that is inert with respect to the sample under analysis and may include a cover which may be sealed. Typical materials for the sample container are metals such as aluminum, copper, and stainless steels for low and moderate temperatures; platinum, platinum group alloys and nickel based alloys for higher temperatures and ceramics such as alumina for very high temperatures. The sample container materials must be compatible with the sample holder materials otherwise reactions may occur that can damage the container and the sample holder and introduce spurious signals into the measurements.

Accurate measurement of sample temperature is essential for thermal analysis experiments, regardless of whether the experiment includes differential temperature or heat flow rate measurements. Many modern instruments employ sample holders where the temperature sensor is located within the sample holder. Sample holders of this type are described by Boersma in J. Am. Cer. Soc. vol. 38, no. 8 at pages 281-284.

Given that the temperature sensor is installed within the sample holder, and the sample under analysis is held in a sample container, it will be recognized that there is a series of thermal resistances between the sample and the temperature sensor. Because of these thermal resistances, and additional heat exchange factors, the temperature realized by the sensor will be different from the actual sample temperature. The thermal resistances include: thermal resistance within the sample, thermal contact resistance between the sample and its container, thermal resistance within the container, thermal contact resistance between the sample container and the sample holder, thermal resistance within the sample holder, and thermal contact resistance between the sample holder and the temperature sensor. Taken together, the thermal resistances are connected in series and comprise two types of thermal resistance. Those associated with conduction of heat within a body depend on the thermal conductivity of the body and the geometry of the heat flow path. Those associated with interfaces between two bodies depend upon the projected contact area, the surface condition and conformity of the mating surfaces, thermal conductivity of the mating materials and thermal conductivity of the gas within the interstices between the mating surfaces See, *e.g.,* C. V. Madhusudana, Thermal Contact Conductance (Springer-Verlag, 1996). To measure the temperature correctly, these thermal resistances should be minimized and be repeatable so that precision of the measurement is maximized.

Given that thermal conductivity of the sample is an intrinsic property of the sample material, the only way thermal resistance within the sample can be reduced is by modifying the shape of the sample. If possible, the sample should be in the form of a thin flat sheet that reduces the heat conduction distance within the sample and also has the benefit of increasing the projected area and the conformity of the sample to the sample container thereby also reducing the thermal contact resistance between the sample and the sample container. Sample containers are generally in the shape of a thin walled hollow cylinder with one flat closed end that contacts the sample holder. Thermal resistance within the sample container may be minimized by using high thermal conductivity materials and by making the walls of the cylinder as thin as possible. In practice, container materials are generally chosen for their inertness with respect to sample materials and sample holders and by their ability to withstand high temperatures; thus, thermal conductivity of the container material may not be freely chosen and thickness of the container walls is often chosen because of fabrication and durability considerations rather than for minimizing thermal resistance. Thermal contact resistance between sample containers and sample holders depends mainly on the conformity of the generally flat contact surfaces. Thus, both surfaces should be flat and smooth to minimize thermal contact resistance.

Thermal resistance within the sample holder depends upon the thermal conductivity of the sample holder material and its geometry, particularly with respect to the temperature sensor location. Like the sample container it is desirable to make the sample holder of high thermal conductivity materials but the choice is usually limited by compatibility with the sample container, temperature resistance and ease of fabrication, especially when joining processes are employed to construct the sample holder assembly. The position of the temperature sensor within the sample holder is preferably as close to the interface between the sample holder and the sample container as possible to minimize this thermal resistance. Finally, it is desirable to minimize the thermal resistance between the sample holder and the temperature sensor. Its nature and magnitude will depend upon the temperature sensor construction, materials of construction and the method employed to join the sensor to the sample holder.

When the thermal analysis sample holder is employed in an instrument incorporating thermogravimetry, it must also support and maintain the position of the sample container to ensure that weighing errors do not occur due to movement of the sample container relative to the sample holder or to movement of the sample holder relative to the balance assembly.

In one example of the prior art a thermal analysis sample holder comprises a platinum disk that supports the sample container. It is welded to a thermocouple bead; the thermocouple wires pass through a ceramic tube which supports the wires, thermocouple bead and platinum disk. This design has the advantage of having potentially low overall thermal resistance between the sample and the thermocouple because the thermocouple is welded to the platinum disk that supports the sample container. Also, because the platinum disk is thin and platinum has a relatively high thermal conductivity, thermal resistance of the sample holder and thermal contact resistance between holder and sensor are low. However, platinum is very ductile, especially at high temperature and the disk may not remain flat; thus, thermal contact resistance between the sample holder and container may be high and may change as the disk deforms over time through use. Given that the sample holder is supported by platinum alloy thermocouples which are also ductile, the position of the disk may change as the thermocouple wires deform, causing weighing errors when the sample holder is used in an instrument incorporating thermogravimetry. Additionally, thermal expansion of the thermocouple wires within the ceramic tube that supports the sample holder assembly may cause the position of the sample holder to change causing weighing errors. Another shortcoming of this prior art is that the platinum disk may react with sample containers, particularly those made of metals, limiting the usefulness of this design.

U.S. patent 5,321,719 to Reed et al. discloses an improved sample holder that avoids some of the problems of the previous prior art. It also employs a platinum disk with a thermocouple welded to it, but the disk is supported by a ceramic sample support platform that maintains the position of the disk and the sample container thereby avoiding weighing errors due to changes of sample holder and container position. The platinum liner is press-fitted into the ceramic sample support. While this invention largely solves the problem of changes of the position of the platinum liner and the sample container, other shortcomings remain. Because the platinum liner is press-fitted into the ceramic sample support and because platinum has a higher coefficient of thermal expansion than the ceramic support structure, as the assembly heats up, the platinum tends to expand more than the ceramic. This puts the disk in compression, and at elevated temperatures the platinum disk may yield or creep and become permanently smaller in diameter than it would have been if it had not been constrained by the ceramic structure. Upon cooling, the platinum contracts and because its diameter was permanently reduced at high temperature by yielding or creeping, the original press fit is lost and the liner is no longer closely fitted to the ceramic support structure.

During subsequent heating, the contact points between the liner and the ceramic support may change, disrupting the temperature distribution within the disk and introducing temperature disturbances which appear in the temperature, heat flow rate or differential temperature signals. Welding the thermocouple to the disk tends to distort it, reducing its flatness and increasing the thermal contact resistance between it and the sample container, reducing precision of temperature measurement and heat flow rate or differential temperature measurements. Also, repetitive heating and cooling may further reduce the disk flatness as it yields or creeps under the loads imposed by differential thermal expansion between it and the ceramic structure. Finally, because of the tendency of platinum to react with other metals, it is limited to operation at relatively low temperatures when using metal sample containers. When the metal sample container is platinum, it tends to stick to the disk at temperatures in the vicinity of 1000 °C and above making it difficult to remove the sample container without damaging it or the disk.

Roura P et al: "Analysis of the sensitivity and sample-furnace thermal-lag of a differential thermal analyser", Thermochimica Acta, Elsevier Science Publishers, Amsterdam, NL, vol. 430, no. 1-2, 1 June 2005, pages 115-122, discloses an analysis of the heat exchange between the horizontal furnace of a differential thermal analyser (DTA) and a sample.

Sauerhammer B et al: "Effect of liquid phase on scale formation during high-temperature oxidation of AlSi-transformation-induced plasticity steel surfaces", Metallurgical and Materials Transaction B, Springer-Verlag, New York, vol. 36, no. 4, 1 August 2005, pages 503-512, discloses the oxidation kinetics, and the structural evolution of the resulting surface scale, of cast transformation-induced plasticity steel.

Thomsia A P: "Ceramic/metal joining for structures and materials", Journal de Physique IV; The 3rd European Conference on Advanced Materials and Processes/Troisieme Conference Europeenne sur les Materiaux er les Procédés Avancés; Paris: 1993.06.08-10; Colloque C7, vol. 3, no. C7 1 November 1993, pages 1317-1326, discloses a discussion of various types of ceramic joining.

Dalgleish B J et al: "Low temperature routes to joining ceramics for high-temperature applications", Scripta Metallurgica et Materialia, Pergamon Press, GB, vol. 31, no. 8, 15 October 1994, pages 1043-1048, discloses methods of joining ceramics for high-temperature applications.

Yu Naidich et al: "High-strength oxide ceramics joints obtained by diffusion bonding with the use of platinum and palladium gaskets", Journal of Materials Science, Kluwer Academic Publishers, BO, vol. 40, no. 9-10, 1 May 2005, pages 2477-2479, discloses alumina and zirconia ceramics joints.

### SUMMARY

This invention arises, in part, from the realization that a sample holder can be formed out of ceramic material, such as alumina, which is generally more dimensionally stable at high temperatures, as compared to metals, and which also reacts with fewer materials, especially metals at higher temperatures, than the sample holders of the prior art. Additional advantages may be conferred by a diffusion bonded construction which allows a thermocouple to be reliably joined to a ceramic sample holder.

Accordingly, one aspect of the present invention features a sample holder as defined by the claims.

Other aspects, features, and advantages are in the description, drawings, and claims.

### BRIEF DESCRIPTION OF THE DRAWINGS

FIG. 1 is an isometric view of a thermal analysis sample holder.
FIG. 2 is an isometric view of the thermal analysis sample holder of FIG. 1, with a partial cutaway section to highlight features of its construction.
FIGS. 3 and 4 are isometric views of a thermal analysis holder in which a sample cup is joined directly to a ceramic beam by diffusion bonding.

Like reference numbers indicate like elements.

### DETAILED DESCRIPTION

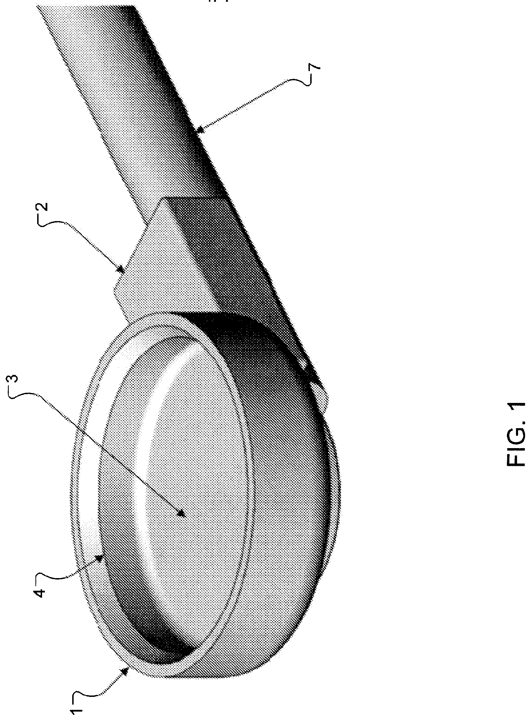

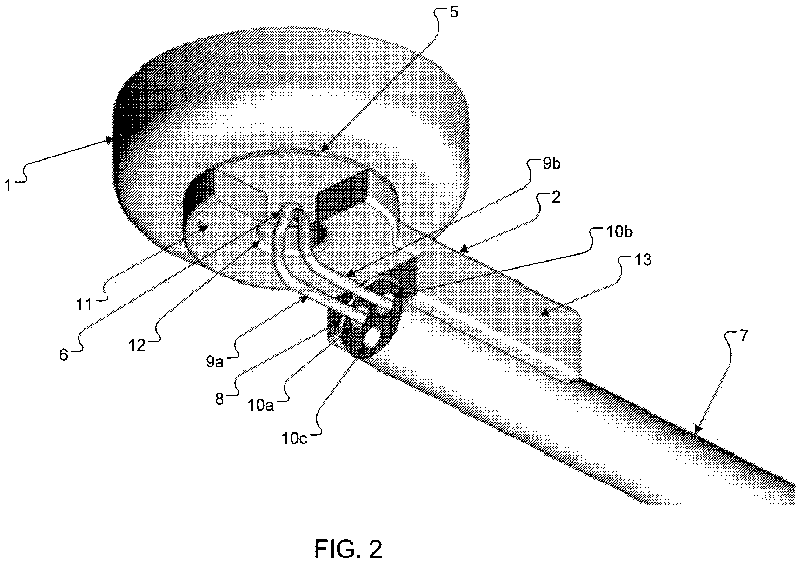

Referring to Figures 1 and 2, a thermal analysis sample holder includes a sample cup 1 for receiving and supporting a sample container, an adapter 2, a thermocouple temperature sensor (thermocouple 6), and a ceramic beam 7. The sample cup 1 is a shallow flat-bottom thin wall cylinder. The sample cup 1 is preferably made of a ceramic, such as high purity alumina, greater than 99.5% Al₂O₃, or other ceramic with similar thermal, mechanical and chemical properties. The sample cup 1 is fabricated with a flat bottom 3 to minimize the thermal contact resistance between the cup and the flat bottom of the sample container. An inner diameter 4 of the sample cup 1 is just slightly larger (e.g., 0.1016 mm (0.004 inches) to 0.4064 mm (0.016 inches) larger) than the base diameter of the sample container to precisely maintain the position of the sample container to maximize weighing precision when used in devices incorporating thermogravimetry measurements. The sample cup 1 is joined to the adapter 2 by diffusion bonding where a thin interlayer 5 of pure platinum joins the two parts and to which the thermocouple temperature sensor 6 is welded. Platinum interlayer 5 is preferably greater than 99.9% pure, and more preferably at least about 99.98% pure. The thermocouple 6 may be one of several platinum and platinum alloy thermocouples including platinum/rhodium thermocouple types R, S and B; Type P (55Pd/31Pt/14Au vs. 65Au/35Pd) thermocouple may also be used for temperatures below 1300 °C.

The adapter 2 facilitates connection of the sample cup 1 to the ceramic beam 7 that in turn is attached to a measuring apparatus. The adapter 2 and ceramic beam 7 are preferably made of a ceramic, such as high purity alumina, greater than 99.5% Al₂O₃, or other ceramic with similar thermal, mechanical and chemical properties. The adapter 2 has a disk shaped first portion 11 (shown in partial cross-section in FIG.2), which supports the sample cup 1. A through-hole 12 extends through the first portion 11, and, following the diffusion bonding of the adapter 2 and the sample cup 1, leaves a portion of the platinum interlayer 5 exposed along the bottom surface of the sample cup 1 for connection of the thermocouple 6.

The adapter 2 also has a second portion 13 that extends outwardly from the first portion 11 and defines a semi-cylindrical surface 8. The semi-cylindrical surface 8 mates with the diameter of ceramic beam 7. High temperature ceramic cement, such as Sauereisen 2 or equivalent, is applied to the interface between semi-cylindrical surface 8 and the diameter of the ceramic beam 7 to join the adapter 2 to the beam. Thermocouple wires 9a and 9b pass through parallel bores 10a and 10b in the ceramic beam 7 that support, protect and electrically insulate the thermocouple wires 9a, 9b. Optionally, parallel bore 10c may be provided to reduce the weight of the ceramic beam 7.

Joining ceramics by diffusion bonding using metallic interlayers is a well known technique. See, e.g. , R. V. Allen, et al., J. Mat. Sci., 18 (1983) 2835-2843; O. M. Akelsen, J. Mat. Sci., 27 (1992) 569-579. Diffusion bonding using metallic interlayers is a solid state joining process that consists of pressing the mating surfaces of the parts to be joined together under a fairly high load, exposing the joint to high temperatures in a furnace under a controlled atmosphere and maintaining the mating pressure, temperature and atmosphere for a sufficient time period that a strong bond is formed. Over time, under the action of temperature and pressure, molecules of the mating materials interdiffuse, forming a strong very thin joint that can be stronger than the base materials. To form a good diffusion bond joint, the faying surfaces must be very flat and smooth to insure that the surfaces have a large area of contact. Generally, the surfaces should be polished so that the height of asperities is small, so that the gaps between surfaces will close as material diffuses away from the asperities where initial contact between the mating materials is made. Given enough time at the diffusion bonding temperature, diffusion processes will cause the gaps to disappear completely. Optimal bonding conditions for high purity alumina ceramics using a platinum interlayer are as follows:
Temperature of 1350 °C to 1450 °C; however, bonding could be effective at temperatures ranging from 1300 °C to 1500 °C; lower temperatures could also be used, albeit with longer periods of time.

Contact pressure of 0.8-8 MPa for 2 to 10 hours, preferably at about 2 MPa for about 4 hours in air.

A platinum bonding interlayer 0.0254 mm (0.001") to 0.127 mm (0.005" thick, preferably about 0.0762 mm (0.003") thick.

Other bonding metals for alumina include nickel, aluminum, copper and mild and high alloy steels. These could be used for lower temperature applications. Joints produced using this method were often found to be stronger than the ceramic base materials.

If a ceramic other than alumina is preferred, the bonding metal must be compatible with that ceramic and with the specific application. For example, SiC could be bonded using Nb and Nimonic-80A.

There are several advantages that the present invention may provide over the prior art. Contact resistance between the sample container and the sample holder is reduced because the heat transfer surface of the ceramic sample holder can be made initially flat by grinding and polishing of the surface. Moreover, because the alumina structure is more dimensionally stable at high temperatures, the heat transfer surface will remain flat in use and contact resistance between sample holder and container will vary less, improving the precision of temperature, differential temperature and heat flow rate measurements. The alumina sample holder will react with fewer materials, especially metals at higher temperatures than the sample holders of the prior art, expanding the useful temperature range of metal sample containers. These advantages are conferred principally by the diffusion bonded construction which allows a thermocouple to be reliably joined to a ceramic sample holder.

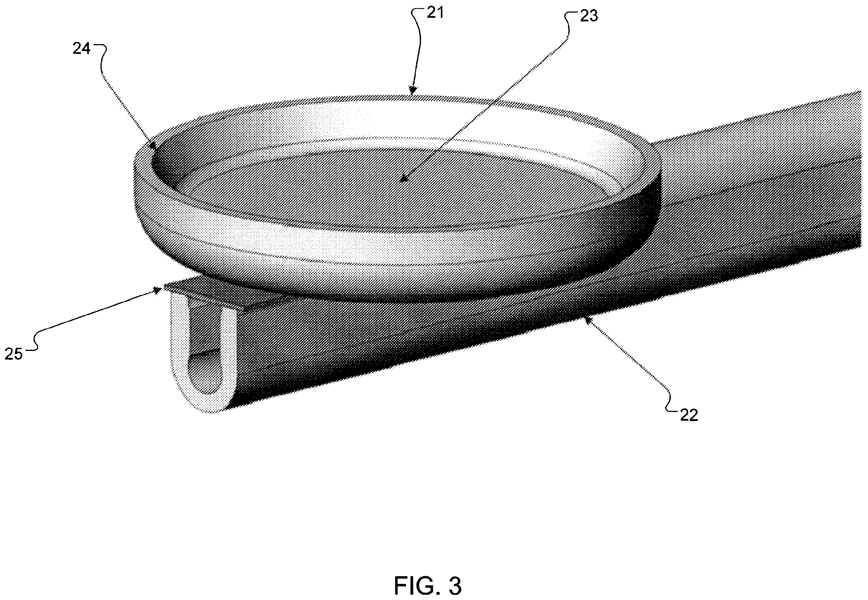

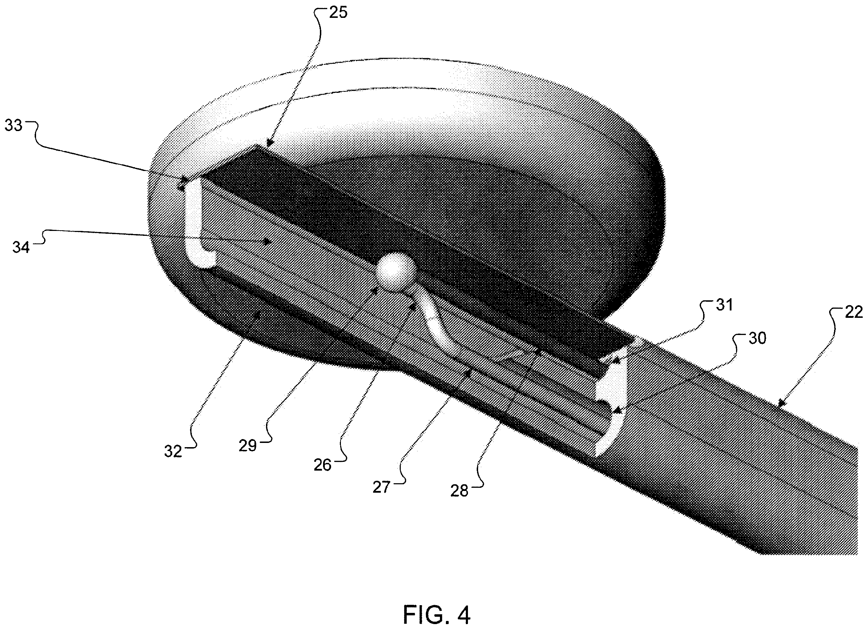

Although a specific embodiment has been described in detail above, other modifications are possible. For example, FIG. 3 illustrates an embodiment of a thermal analysis sample holder in which a sample cup is joined directly to a sample beam. Referring to FIG. 3, the sample cup 21 is a shallow flat-bottomed thin wall cylinder. The sample cup 21 is preferably constructed of a ceramic, such as high purity alumina, greater than 99.5% Al₂O₃, or other ceramic with similar thermal, mechanical and chemical properties. The sample cup 21 is fabricated with a flat bottom 23 to minimize the thermal contact resistance between it and the sample container, which it supports. An inner diameter 24 of the sample cup 21 is just slightly smaller than the base diameter of the sample container to precisely maintain the position of the sample container to maximize weighing precision when used in devices incorporating thermogravimetry measurements. Notably, the sample cup 21 is joined to sample beam 22 by diffusion bonding where a thin interlayer 25 of pure platinum joins the two parts and to which the thermocouple temperature sensor 26 (FIG. 4) is welded. Platinum interlayer 25 is preferably greater than 99.9% pure, and more preferably at least about 99.98% pure. The thermocouple 26 may be one of several platinum and platinum alloy thermocouples including platinum/rhodium thermocouple types R, S and B; Platinel II, 55Pd/31Pt/14Au vs. 65Au/35Pd thermocouple may also be used for temperatures below 1300°C. The sample beam 22 is likewise constructed of a ceramic, such as high purity alumina, greater than 99.5% Al₂O₃, or other ceramic with similar thermal, mechanical and chemical properties. It is in the form of an obround with two parallel bores 30, 31 (FIG. 4) passing through it, the two bores protect, support and insulate the thermocouple wires that pass through them.

Referring to FIG. 4, the thermocouple 26 includes a pair of thermocouple wires 27 and 28 which are joined to form a junction 29 which is welded to the platinum interlayer 25. One of the thermocouple wires is the positive thermoelectric element and the other is the negative thermoelectric element. Each thermocouple wire 27, 28 passes through one of the bores 30, 31 through sample beam 22. The underside 32 of the sample cup is ground flat to facilitate diffusion bonding between it and one side of the platinum interlayer. A portion of the sample beam 22 is ground away to create a flat surface 33 that allows it to be diffusion bonded to the other side of the platinum interlayer. The portion of the sample beam 22 that is cut away is parallel to the long axis of the sample beam 22 and to the two parallel bores 30, 31; it extends from a tangent to the obround to the mid plane of the bore closest to the tangent. That is to say, that the cutaway in the beam comprises the semicircular portion of one end of the obround section. The cutaway portion extends from the end of the sample beam 22 closest to the sample cup 21 along the beam 22 a distance that is slightly greater (e.g., .010 inches and 0.200 inches greater) than the diameter of the sample cup 21. An additional cut 34 is made through the part of the sample beam 22 between the two parallel bores to allow thermocouple wire 27 to enter bore 30. Cut 34 extends from the end of the sample beam 22 closest to the sample cup to a location just beyond the center of the sample cup where the thermocouple is welded to the platinum interlayer. By constructing the sample holder in this manner, the diffusion bonded platinum interlayer joins the junction of the thermocouple 26 to the bottom of the sample cup 21, creating a low thermal resistance connection of the temperature thermocouple to the sample cup and also joins the sample cup 21 to the sample beam 22 forming a strong heat resistant structure.

The foregoing embodiments have been presented for purposes of illustration and description. It is not intended to be exhaustive or to limit the invention to the precise forms disclosed. Many variations and modifications of the embodiments described herein will be apparent to one of ordinary skill in the art in light of the above disclosure. Notably, the scope of the invention is to be defined only by the claims.

## Claims

1. A sample holder comprising:
a ceramic thin-walled cylinder (1, 21) having a flat bottom and having a ceramic heat transfer surface to contact a sample container, the ceramic thin-walled cylinder (1, 21) dimensioned to hold a sample container;
a ceramic beam (7, 22);
a thermocouple (6, 26) attached to the bottom of the ceramic thin-walled cylinder (1, 21),
wherein the ceramic thin-walled cylinder (1, 21) is diffusion-bonded to:
the ceramic beam (7, 22); or
a ceramic adapter (2), to which the ceramic beam (7, 22) is attached.

2. The sample holder of claim 1, comprising a ceramic adaptor (2) diffusion-bonded to the ceramic thin-walled cylinder (1, 21) using a platinum interlayer (5, 25).

3. The sample holder of claim 2, wherein the platinum interlayer (5, 25) is greater than 99.9% pure.

4. The sample holder of claim 1, further comprising a sample container for use in the sample holder, wherein the inner diameter of the ceramic thin-walled cylinder (1, 21) is just slightly larger than the base diameter of the sample container.

5. The sample holder of claim 1, wherein the ceramic thin-walled cylinder (1, 21) is an alumina sample cup, preferably 99.5% Al₂O₃, and/or the ceramic beam (7, 22) is an alumina ceramic beam and/or the ceramic adapter (2) is an alumina ceramic adapter.

6. The sample holder of claim 1, comprising a ceramic adapter (2), wherein the ceramic beam (7, 22) is cylindrical and the ceramic adapter (2) has a semi-cylindrical surface dimensioned to mate with the ceramic beam (7, 22).

7. The sample holder of claim 1, wherein the ceramic thin-walled cylinder (1, 21) and the ceramic beam (7, 22) each have a polished faying surface, wherein the faying surface of the ceramic beam (7, 22) is diffusion-bonded to the faying surface of the ceramic thin-walled cylinder (1, 21), and/or wherein the thermocouple (6, 26) comprises wires (9a, 9b, 27, 28) that pass through parallel bores (10a, 10b, 30, 31) in the ceramic beam (7, 22).

8. The sample holder of claim 1, wherein the ceramic beam (7, 22) has a substantially obround cross-sectional shape along its longitudinal axis, and wherein a first portion of the ceramic beam (7, 22) is finished to create a flat surface that is diffusion bonded to the bottom (3, 23) of the ceramic thin-walled cylinder (1, 21).

9. The sample holder of claim 8, wherein the first portion extends from an end of the ceramic beam (7, 22) closest to the ceramic thin-walled cylinder (1, 21) along the ceramic beam (7, 22) a distance that is slightly greater than the diameter of the ceramic thin-walled cylinder (1, 21).

10. A differential scanning calorimeter, a differential thermal analyzer or a differential thermogravimetric analyzer comprising the sample holder of any preceding claim.

## Patentansprüche

1. Probenhalter, der Folgendes umfasst:
einen dünnwandigen Keramikzylinder (1, 21) mit einem flachen Boden und einer keramischen Wärmetransferfläche für einen Kontakt mit einem Probenbehälter, wobei der dünnwandige Keramikzylinder (1, 21) so bemessen ist, dass er einen Probenbehälter aufnimmt;
einen Keramikträger (7, 22);
ein Thermoelement (6, 26), das am Boden des dünnwandigen Keramikzylinders (1, 21) befestigt ist, wobei der dünnwandige Keramikzylinder (1, 21) diffusionsgebunden ist an:
den Keramikträger ((7, 22); oder
einen Keramikadapter (2), an dem der Keramikträger (7, 22) befestigt ist.

2. Probenhalter nach Anspruch 1, der einen Keramikadapter (2) umfasst, der unter Verwendung einer Platinzwischenschicht (5, 25) an den dünnwandigen Keramikzylinder (1, 21) diffusionsgebunden ist.

3. Probenhalter nach Anspruch 2, wobei die Platinzwischenschicht (5, 25) eine Reinheit von mehr als 99,9 % hat.

4. Probenhalter nach Anspruch 1, der ferner einen Probenbehälter zur Verwendung im Probenhalter umfasst, wobei der Innendurchmesser des dünnwandigen Keramikzylinders (1, 21) nur geringfügig größer ist als der Basisdurchmesser des Probenbehälters.

5. Probenhalter nach Anspruch 1, wobei der dünnwandige Keramikzylinder (1, 21) eine Aluminiumoxid-Probenschale, vorzugsweise 99,5 % A1₂O₃, ist und/oder der Keramikträger (7, 22) ein Aluminiumoxid-Keramikträger ist und/oder der Keramikadapter (2) ein Aluminiumoxid-Keramikadapter ist.

6. Probenhalter nach Anspruch 1, der einen Keramikadapter (2) umfasst, wobei der Keramikträger (7, 22) zylindrisch ist und der Keramikadapter (2) eine halbzylindrische Oberfläche hat, die so bemessen ist, dass sie mit dem Keramikträger (7, 22) zusammenpasst.

7. Probenhalter nach Anspruch 1, wobei der dünnwandige Keramikzylinder (1, 21) und der Keramikträger (7, 22) jeweils eine polierte Kontaktfläche haben, wobei die Kontaktfläche des Keramikträgers (7, 22) an die Kontaktfläche des dünnwandigen Keramikzylinders (1, 21) diffusionsgebunden ist und/oder wobei das Thermoelement (6, 26) Drähte (9a, 9b, 27, 28) umfasst, die durch parallele Bohrungen (10a, 10b, 30, 31) im Keramikträger (7, 22) laufen.

8. Probenhalter nach Anspruch 1, wobei der Keramikträger (7, 22) eine im Wesentlichen länglich-runde Querschnittsgestalt entlang seiner Längsachse hat und wobei ein erster Abschnitt des Keramikträgers (7, 22) so gefertigt ist, dass eine flache Oberfläche erzeugt wird, die an den Boden (3, 23) des dünnwandigen Keramikzylinders (1, 21) diffusionsgebunden ist.

9. Probenhalter nach Anspruch 8, wobei sich der erste Abschnitt von einem Ende des Keramikträgers (7, 22), das dem dünnwandigen Keramikzylinder (1, 21) am nächsten ist, entlang dem Keramikträger (7, 22) über eine Distanz erstreckt, die geringfügig größer ist als der Durchmesser des dünnwandigen Keramikzylinders (1, 21).

10. Differential-Scanning-Kalorimeter, Differentialthermoanalysator oder thermogravimetrischer Differentialanalysator, das/der den Probenhalter nach einem vorherigen Anspruch umfasst.

## Revendications

1. Porte-échantillon comprenant :
un cylindre à paroi mince en céramique (1, 21) ayant une partie inférieure plate et ayant une surface de transfert thermique en céramique pour entrer en contact avec un contenant d'échantillon, le cylindre à paroi mince en céramique (1, 21) étant dimensionné pour tenir un contenant d'échantillon ;
une tige céramique (7, 22) ;
un thermocouple (6, 26) fixé à la partie inférieure du cylindre à paroi mince en céramique (1, 21),
dans lequel le cylindre à paroi mince en céramique (1, 21) est soudé par diffusion à :
la tige céramique (7, 2) ; ou à
un adaptateur céramique (2), auquel la tige céramique (7, 22) est fixée.

2. Porte-échantillon selon la revendication 1, comprenant un adaptateur céramique (2) soudé par diffusion au cylindre à paroi mince en céramique (1, 21) à l'aide d'une couche intermédiaire de platine (5, 25).

3. Porte-échantillon selon la revendication 2, dans lequel la couche intermédiaire de platine (5, 25) est pure à plus de 99,9 %.

4. Porte-échantillon selon la revendication 1, comprenant en outre un contenant d'échantillon destiné à être utilisé dans le porte-échantillon, dans lequel le diamètre intérieur du cylindre à paroi mince en céramique (1, 21) est juste légèrement supérieur au diamètre de base du contenant d'échantillon.

5. Porte-échantillon selon la revendication 1, dans lequel le cylindre à paroi mince en céramique (1, 21) est un creuset pour échantillon en alumine, de préférence à 99,5 % de A1₂O₃, et/ou la tige céramique (7, 22) est une tige céramique d'alumine et/ou l'adaptateur céramique (2) est un adaptateur céramique d'alumine.

6. Porte-échantillon selon la revendication 1, comprenant un adaptateur céramique (2), dans lequel la tige céramique (7, 22) est cylindrique et l'adaptateur céramique (2) a une surface semi-cylindrique dimensionnée pour s'apparier avec la tige céramique (7, 22).

7. Porte-échantillon selon la revendication 1, dans lequel le cylindre à paroi mince en céramique (1, 21) et la tige céramique (7, 22) ont chacun une surface de contact polie, dans lequel la surface de contact de la tige céramique (7, 22) est soudée par diffusion à la surface de contact du cylindre à paroi mince en céramique (1, 21), et/ou dans lequel le thermocouple (6, 26) comprend des fils métalliques (9a, 9b, 27, 28) qui passent à travers des alésages parallèles (10a, 10b, 30, 31) dans la tige céramique (7, 22).

8. Porte-échantillon selon la revendication 1, dans lequel la tige céramique (7, 22) a une forme transversale sensiblement obronde le long de son axe longitudinal, et dans lequel une première partie de la tige céramique (7, 22) est finie pour créer une surface plate qui est soudée par diffusion à la partie inférieure (3, 23) du cylindre à paroi mince en céramique (1, 21).

9. Porte-échantillon selon la revendication 8, dans lequel la première partie s'étend d'une extrémité de la tige céramique (7, 22) la plus proche du cylindre à paroi mince en céramique (1, 21) le long de la tige céramique (7, 22) d'une distance qui est légèrement supérieure au diamètre du cylindre à paroi mince en céramique (1, 21).

10. Calorimètre à balayage différentiel, analyseur thermique différentiel ou analyseur thermogravimétrique différentiel comprenant le porte-échantillon selon l'une quelconque des revendications précédentes.
